# DEMANDE DE BREVET EUROPEEN

(11) **EP 4 006 511 A1**
(43) Date de publication de la demande: **01.06.2022**
(21) Numéro de dépôt: 21209550.9
(22) Date de dépôt: 22.11.2021
(51) Int. Cl.: G01K 1/08, G01K 1/14

(54) **DISPOSITIF DE PROTECTION D'UN COMPOSANT ÉLECTRONIQUE**

(30) Priorité: 27.11.2020 FR 2012312
(71) Demandeur: Leoni Wiring Systems France, 78180 Montigny le Bretonneux (FR)
(72) Inventeur: MACHEBOEUF, Pierre, 92420 Vaucresson (FR)
(74) Mandataire: LLR

(57) **Abrégé**

L'invention concerne un dispositif de protection (20) d'un composant électronique (12) composé d'au moins une branche d'alimentation (16) électrique et d'une tête (14). Il comprend :
- une gorge de maintien (24) de ladite au moins une branche d'alimentation (16),
- un arceau de protection (30) de la tête (14) muni de deux jambes (32) et d'une voûte (34), l'arceau de protection (30) étant destiné à cercler la tête (14) lorsque ladite branche d'alimentation (16) est disposée dans la gorge de maintien (24), et
- un boîtier de protection (40) muni d'un canal de pincement (44).
L'arceau de protection (30) est muni d'au moins une zone amincie autorisant sa déformation élastique de sorte que l'insertion de l'arceau de protection (30) dans le canal de pincement (41) provoque le rapprochement des deux jambes (32) l'une vers l'autre.

## Description

L'invention concerne le domaine de l'intégration de composant électroniques dans un environnement automobile, notamment dans une pièce de carrosserie de véhicule automobile. L'invention concerne plus particulièrement l'intégration de composant électroniques alimentés par des câbles électriques disposés à l'intérieur du véhicule.

Afin de disposer d'informations sur l'environnement extérieur ou intérieur d'un véhicule automobile, on utilise des composant électroniques de valeurs représentatives des conditions de cet environnement, tels que des composant électroniques de température, qui sont intégrés dans des pièces de carrosserie ou à l'intérieur de ce véhicule.

De façon classique, on utilise des thermistances pour obtenir des informations sur la température du véhicule, qui sont notamment disposées dans un espace prévu à cet effet, dans un logement prévu à l'extérieur ou à l'intérieur du véhicule, comme par exemple un rétroviseur.

Or, certains constructeurs automobiles requièrent, en raison de contraintes d'intégration dans le rétroviseur (ou un autre logement), ou encore pour des raisons esthétiques, que l'extrémité de mesure de la thermistance contenant la résistance, ou tête de mesure, et son extrémité d'alimentation, généralement constituée de deux branches d'alimentation dont les extrémités libres sont raccordées à des câbles électriques eux-mêmes raccordés à une source de courant disposée dans le véhicule, ne soient pas situées dans le même plan comme elles le sont en général dans une thermistance trouvée dans le commerce. Pour ce faire, on déforme les branches d'alimentation, qui sont en général flexibles du fait de leurs faibles dimensions (de l'ordre du millimètre de diamètre), en les pliant de sorte à former un coude entre la tête de mesure et les extrémités libres des branches d'alimentation.

Un tel pliage est réalisé manuellement par un opérateur. Or, eu égard aux très faibles dimensions de la tête de mesure (de l'ordre de 0.4 mm), il est difficile pour ce dernier d'effectuer cette manipulation sans risquer de l'endommager. Il est connu, par exemple du document EP0619878 de protéger une tête de thermistance par un arceau venant l'encercler pour éviter ce problème. Toutefois, si cette protection est suffisante pour permettre à l'opérateur d'effectuer le pliage sans risquer l'endommagement de la tête, elle n'est pas suffisante pour assurer la protection de la thermistance après pliage pour son usage dans le véhicule. Pour cela, on la protège par un capot de protection qui l'englobe dans la plupart des directions.

En outre, il est nécessaire de garantir avec précision l'orientation dans l'espace de l'extrémité de mesure par rapport à l'extrémité d'alimentation. En effet, une incertitude sur le positionnement de la tête de mesure par rapport à son extrémité de mesure a pour conséquence qu'il n'est plus possible de déterminer l'augmentation du temps de réponse de la thermistance après déformation, car ses conditions ne peuvent plus être déterminées de façon précise, contrairement à ce qui peut se faire lorsque la thermistance est à son état initial non déformée. Il en résulte que certaines thermistances déformées ont un temps de réponse trop élevé pour être acceptable par les normes imposées par le constructeur.

Il existe donc également un besoin de s'assurer, une fois la thermistance pliée, de la maintenir en place. Il est ainsi connu de prévoir des moyens de verrouillage en place de la thermistance sur le capot de protection.

Or, de tels moyens de verrouillage sont généralement basés sur des moyens d'encliquetage réalisés en saillie du capot de protection, ce qui non seulement le complexifient en termes de fabrication, mais rendent difficile l'interaction avec l'arceau de protection et complexifient sa manipulation par l'opérateur.

L'invention a notamment pour but de fournir un dispositif permettant le pliage et le maintien en position pliée, par un opérateur, d'une thermistance ou tout autre composant électronique, qui soit simple de fabrication et d'utilisation, tout en limitant les risques d'endommager le composant électronique lors du pliage.

A cet effet, l'invention a pour objet un dispositif de protection d'un composant électronique composé d'au moins une branche d'alimentation électrique et d'une tête, comprenant :
- une gorge de maintien de ladite au moins une branche d'alimentation,
- un arceau de protection de ladite au moins une tête muni de deux jambes et d'une voûte, l'arceau de protection étant destiné à cercler la tête lorsque ladite branche d'alimentation est disposée dans la gorge de maintien,
   **caractérisé en ce qu'il** comprend un boîtier de protection muni d'un canal de pincement,
   **et en ce** que l'arceau de protection est muni d'au moins une zone amincie autorisant une déformation élastique de l'arceau de protection de sorte que l'insertion de l'arceau de protection dans le canal de pincement provoque le rapprochement des deux jambes l'une vers l'autre.

Grâce au fait que l'arceau de protection soit muni d'au moins une zone amincie autorisant sa déformation élastique et que le boîtier de protection soit muni canal de pincement, il est possible d'introduire l'arceau de protection dans le canal de pincement et de l'y maintenir. Ainsi, non seulement la présence de l'arceau de protection permet de limiter les risques d'endommager le composant électronique lors de son pliage, puisque l'opérateur ne le manipule pas directement, mais on peut maintenir en position pliée le composant électronique en insérant cet arceau dans le canal de pincement. Ceci évite de prévoir des moyens de verrouillage du composant électronique en position qui soient complexes.

Selon un mode de réalisation préféré, le canal de pincement est délimité par le diamètre interne d'une jupe de protection, par exemple un tube de forme générale cylindrique de révolution. En effet, une tête de mesure d'une thermistance étant fréquemment sphérique, la forme de cylindre est particulièrement adaptée pour l'envelopper et ainsi la protéger de l'environnement.

De manière à faciliter la déformation de l'arceau de protection lors de son insertion dans le canal de pincement, l'arceau de protection est muni d'au moins une zone amincie sur chaque jambe et d'au moins une zone amincie sur sa voûte.

Afin d'améliorer encore davantage le maintien de l'arceau de protection et la tête du composant électronique dans le canal de pincement, les jambes de l'arceau et le canal de pincement sont munis de moyens anti-retour empêchant le retrait de l'arceau de protection du canal de pincement dans un sens inverse de son insertion.

Selon un mode de réalisation préféré de l'invention, les moyens anti-retour comprennent deux épaulements anti-retour disposé respectivement sur chaque jambe de l'arceau et de deux épaulements de réception correspondants pratiqués en saillie sur la surface externe du canal de pincement, la fonction anti-retour étant exercée par butée des épaulements anti-retour contre les épaulements de réception. Cette configuration est en effet à la fois simple à fabriquer et simple à manipuler pour un opérateur.

Selon un mode de réalisation préféré de l'invention, le boîtier de protection comprend un corps parallélépipédique, le canal de pincement faisant saillie à partir d'une des parois du corps parallélépipédique, de préférence perpendiculairement à cette paroi. Le corps parallélépipédique du boîtier de protection peut ainsi servir à protéger la portion de la ou des branches d'alimentation du composant électronique n'étant pas insérées dans le canal de pincement. Le fait que le canal de pincement fasse saillie à partir d'une de ses parois de façon perpendiculaire à cette paroi est particulièrement adapté à une configuration pliée de la branche d'alimentation dans laquelle l'angle entre l'extrémité de la branche liée à la tête et l'extrémité opposée de la branche forment un angle sensiblement droit.

L'invention concerne également un gabarit de déformation d'au moins une branche d'alimentation électrique d'un composant électronique, comprenant :
- un corps principal et
- une partie mobile,
   le corps principal et la partie mobile étant chacun munis d'au moins une gorge de maintien de ladite au moins une branche d'alimentation,
   la gorge de maintien de la partie mobile formant un prolongement de la gorge de maintien du corps principal,
   le corps principal et la partie mobile étant reliés par une articulation formant axe de pivotement de la partie mobile par rapport au corps principal,
   de sorte que la partie mobile soit déplaçable entre des première et deuxième positions prédéterminées, les première et deuxième position étant espacées angulairement autour d'un axe de l'articulation,
   l'extrémité libre de la partie mobile étant munie d'un dispositif de protection selon l'invention.

Grâce au gabarit de déformation, il suffit de disposer la tête de mesure à l'extrémité de la partie mobile et l'extrémité d'alimentation dans le corps principal (ou vice versa) et de déplacer la partie mobile pour déformer le composant électronique de manière à garantir la position prédéterminée de la tête de mesure par rapport à l'extrémité d'alimentation. En effet, le placement de la branche d'alimentation dans la gorge guide précisément le mouvement de la branche au cours de sa déformation. En outre, ce mouvement est guidé par le mouvement de la partie mobile, qui est contrôlé et déterminé avec précision par simple choix de la course autorisée par l'articulation. Le geste de l'opérateur est donc guidé par le gabarit de déformation qui garantit un mouvement identique à chaque déformation et l'exactitude du positionnement final des extrémités du composant électronique l'une par rapport à l'autre.

De préférence, afin de limiter les possibilités de mouvement du composant électronique lors de la déformation, l'articulation est une charnière.

Selon un mode de réalisation particulier de l'invention, rendant simple et économique la fabrication du gabarit, la charnière est formée par une paroi flexible reliant le corps principal et la partie mobile, le passage de la partie mobile de la première à la deuxième position s'effectuant par déformation de la paroi flexible.

Selon un mode de réalisation particulier de l'invention, rendant simple et économique la fabrication du gabarit, le corps principal et la partie mobile sont venus de matière, et de préférence réalisés dans un matériau thermoplastique. De préférence, la paroi flexible est une paroi amincie prolongeant le corps principal.

L'invention concerne également un ensemble d'un composant électronique, de préférence une thermistance, muni d'au moins une branche d'alimentation et d'un dispositif de protection du composant électronique, **caractérisé en ce que** le dispositif de protection est selon l'invention.

L'invention concerne également un ensemble d'un composant électronique, de préférence une thermistance, muni d'au moins une branche d'alimentation et d'un gabarit de déformation du composant électronique, **caractérisé en ce que** le gabarit de déformation est selon l'invention.

L'invention concerne également un procédé de déformation d'un composant électronique comprenant au moins une branche de connexion mis en œuvre au moyen d'un gabarit de déformation selon l'invention, comprenant les étapes suivantes :
- le gabarit de déformation étant dans la première position, introduction de ladite au moins branche de connexion dans les gorges de maintien du gabarit de déformation ;
- déplacement de la partie mobile vers la deuxième position par déplacement de l'articulation,
- insertion de l'arceau de protection dans le canal de pincement.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un ensemble de raccordement selon un premier mode de réalisation de l'invention, la partie mobile du gabarit de déformation étant en deuxième position ;
[Fig. 2] la figure 2 est une vue en perspective de l'ensemble de raccordement de la figure 1 sans boîtier de protection, la partie mobile étant en première position ;
[Fig. 3] la figure 3 est une vue similaire à la figure 2, la partie mobile du gabarit de déformation étant en deuxième position ;
[Fig. 4] la figure 4 est une vue partielle de la partie mobile et du boîtier de protection selon la coupe IV-IV ;
[Fig. 5] la figure 5 est une vue similaire à la figure 4, la partie mobile n'étant pas encore introduite dans le canal de pincement.
[Fig. 6] la figure 6 est une vue partielle de l'ensemble de raccordement sans la partie inférieure du boîtier de protection selon la coupe VI-VI ;
[Fig. 7] la figure 7 est une vue similaire à la figure 6 d'un autre détail de l'ensemble de raccordement selon la coupe VI-VI ;
[Fig. 8] la figure 8 est une vue de dessous de l'ensemble de raccordement de la figure 1 sans a partie inférieure du boîter de protection ;
[Fig. 9] la figure 9 est une vue en perspective d'un ensemble de raccordement selon un deuxième mode de réalisation de l'invention, la partie mobile du gabarit de déformation étant en deuxième position ;
[Fig. 10] la figure 10 est une vue en perspective de l'ensemble de raccordement de la figure 9 sans boîtier de protection, la partie mobile étant en première position ;
[Fig. 11] la figure 11 est une vue similaire à la figure 10, la partie mobile du gabarit de déformation étant en deuxième position ;

### Description détaillée

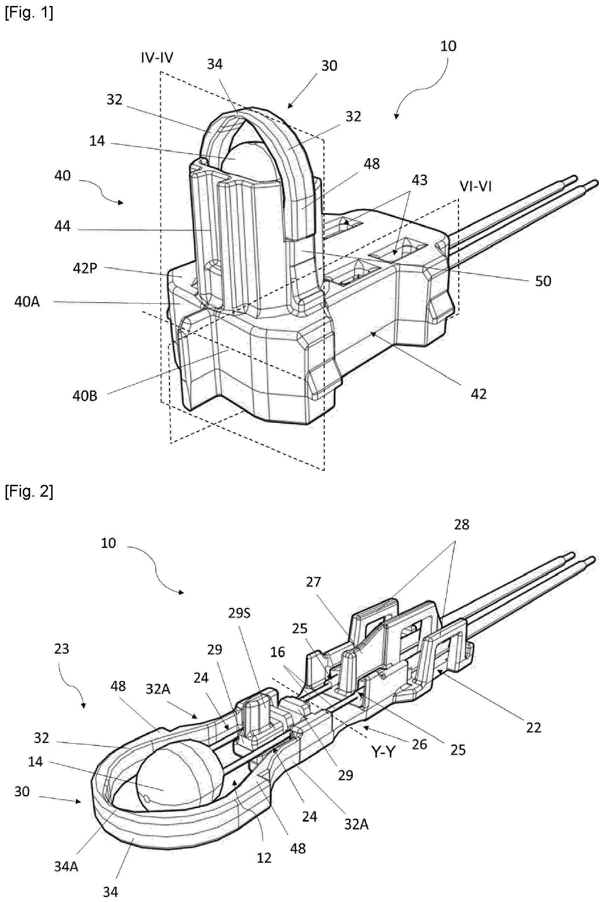

On a représenté aux figures 1 à 8 un ensemble de raccordement d'un composant électronique selon un premier mode de réalisation de l'invention, désigné par la référence générale 10, dans lequel est inséré un composant électronique 12, qui est en l'occurrence une thermistance.

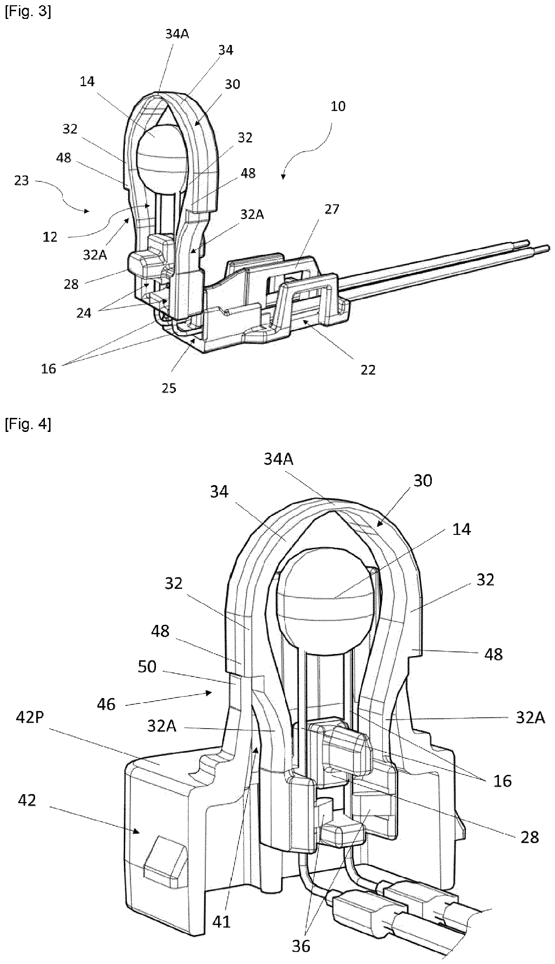

La thermistance 12 représentée sur les figures, et davantage visible sur les figures 2 et 3, est telle que trouvée couramment dans le commerce, et est composée d'une tête de mesure 14, à laquelle sont reliées deux branches d'alimentation 16, qui permettent le raccordement électrique de la tête de mesure 14 à une source d'alimentation de cette dernière (non représentée sur les figures). De façon classique, les branches de raccordement 16 sont sensiblement rectilignes et parallèles entre elles.

L'ensemble de raccordement 10 comprend un gabarit de déformation 18, et un dispositif de protection 20 de la thermistance.

On va en premier lieu décrire le gabarit de déformation 18 en référence aux figures 2 et 3.

Le gabarit de déformation 18 comprend un corps principal 22 et une partie mobile 23, qui sont, dans les exemples représentés sur les figures, de forme générale parallélépipédique. Elles s'étendent ainsi chacune selon une direction longitudinale, qui est en l'occurrence la même. Le corps principal 22 et la partie mobile 23 sont ici venus de matière, et de préférence réalisés dans un matériau thermoplastique.

Le corps principal 22 et la partie mobile 23 sont chacun munis d'au moins une gorge de maintien 24, 25 d'une branche d'alimentation 16, en l'occurrence deux gorges de maintien 24, 25 chacun, la thermistance 12 étant munie ici de deux branches d'alimentation 16. Sur toutes les figures 1 à 8, le composant électronique 12 a déjà été mis en place dans les gorges de maintien 25 du corps principal et les gorges de maintien de la partie mobile 24.

Les gorges de maintien 24 de la partie mobile forment un prolongement des gorges de maintien 25 du corps principal. Plus précisément, les gorges de maintien 25 du corps principal s'étendent ici selon une direction longitudinale, qui est la direction longitudinale selon laquelle s'étend le corps principal 22. Il en est de même pour les gorges de maintien 24 de la partie mobile 23, qui s'étendent selon la direction longitudinale selon laquelle s'étend la partie mobile 23.

Dans la première position illustrée notamment à la figure 2, ces directions longitudinales se confondent. Cette première position correspond à une position dans laquelle les gorges de maintien 24 de la partie mobile sont alignées avec les gorges de maintien 25 du corps principal. Ceci est particulièrement adapté au cas d'une thermistance 12 ayant des branches d'alimentation 16 rectilignes.

Le corps principal 22 et la partie mobile 23 sont reliés par une articulation 26 formant axe de pivotement de la partie mobile 23 par rapport au corps principal 22 de sorte que la partie mobile 23 soit déplaçable entre des première et deuxième positions prédéterminées.

Les première et deuxième positions sont espacées angulairement autour d'un axe de l'articulation 26, qui est ici l'axe Y-Y, l'articulation 26 étant ici de préférence une charnière ou un gond afin de limiter les possibilités de mouvement de la thermistance 12 lors de la déformation. L'axe Y-Y est perpendiculaire à l'axe longitudinal du corps principal 22, qui est en l'occurrence l'axe longitudinal des branches d'alimentation 16 lorsque la partie mobile 23 est en première position.

Une fois les branches d'alimentation 16 insérées dans les gorges de maintien 24, 25 il suffit de déplacer la partie mobile 23 pour déformer la thermistance 12 de façon guidée par l'articulation 26, et arriver à la deuxième position, illustrée notamment à la figure 1 ou 3. Ce mouvement des branches d'alimentation 16 est guidé par le mouvement de la partie mobile 23, qui est contrôlé et déterminé avec précision par simple choix de la course autorisée par la charnière 26.

Dans la deuxième position, illustrée aux figures 1,3, 4, et 6 à 8, la partie mobile 23 s'étend selon un axe longitudinal qui est perpendiculaire à l'axe longitudinal du corps principal 22. Autrement dit, la partie mobile 23 et le corps principal 22 sont espacés angulairement de 90° autour de l'axe Y-Y de la charnière.

Ainsi, les gorges de maintien 24 de la partie mobile 23 s'étendant selon l'axe longitudinal de la partie mobile 23, une fois la partie mobile 23 déplacée en deuxième position, les branches d'alimentation 16 sont déformées de sorte que leur extrémité libre et leur extrémité reliée à la tête de mesure 14 sont perpendiculaires entre elles.

On notera qu'il est possible d'envisager un autre type d'articulation tel qu'une rotule selon la déformation des branches d'alimentation 16 que l'on souhaite obtenir. De même, l'angle d'espacement entre la partie mobile 23 et le corps principal 22 sont variables selon l'angle que l'on souhaite obtenir entre l'extrémité libre et leur extrémité reliée à la tête de mesure 14 des aux branches d'alimentation 16.

Dans le premier mode de réalisation représentés sur les figures 1 à 8, de sorte à rendre simple et économique la fabrication du gabarit de déformation 18, la charnière 26 est formée par une paroi flexible reliant le corps principal 22 et la partie mobile 23.

Le passage de la partie mobile de la première à la deuxième position s'effectue alors par déformation de la paroi flexible 26. Pour faciliter la déformation de la paroi flexible 26, on peut prévoir, comme illustré sur les figures 1 à 8, que cette dernière soit légèrement galbée, le gable étant adapté au sens de déplacement de la charnière.

De préférence, le corps principal 22 et la partie mobile 23 étant venue de matière et réalisé en matériau thermoplastique, cette paroi flexible 26 est une paroi amincie prolongeant le corps principal 22.

Dans le premier mode de réalisation illustré sur les figures 1 à 8, le corps principal 22 est muni, dans sa partie centrale, d'une paroi de séparation 27 disposée entre les gorges de maintien 25 du corps principal, faisant saillie à partir du corps principal 22. La paroi de séparation 27 permet d'assurer un écartement suffisant des branches d'alimentation 16 une fois la thermistance 12 mise en place dans le corps principal 22.

Le corps principal 22 est également muni, le long de chacun de ses bords latéraux, d'arches de verrouillage 28 s'étendant le long de l'axe longitudinal du corps principal 22. En l'occurrence, la paroi de séparation 27 se trouve sensiblement au milieu des arches de verrouillage 28, ou encore les arches de verrouillage 28 sont symétriques par rapport à la paroi de séparation 27, dont le fonctionnement sera expliqué plus loin.

Par ailleurs, dans ce premier mode de réalisation, la partie mobile 23 est munie d'une entretoise 29 permet d'assurer un écartement suffisant des branches d'alimentation 16 une fois la thermistance 12 mise en place dans la partie mobile 23.

Une des entretoises 29, ici l'entretoise 29 la plus proche de l'extrémité libre de la partie mobile 23, comprend une saillie de blocage 29S, dite saillie de blocage supérieure, s'étendant sensiblement de façon normale au plan dans lequel s'étend la partie mobile 23, dont la fonction sera expliquée plus loin.

On va maintenant décrire le dispositif de protection 20. Dans le mode de réalisation préféré illustré sur les figures 1 à 8, l'extrémité libre de la partie mobile, à savoir celle opposée au corps principal 22, est munie du dispositif de protection 20.

Le dispositif de protection 20 inclut ici deux gorges de maintien, qui dans ce mode de réalisation sont confondues avec la gorge de maintien 24 de la partie mobile 23.

Le dispositif de protection 20 comprend en outre un arceau de protection 30 de la tête de mesure 14 de la thermistance 12. Dans le premier mode de réalisation illustré sur les figures 1 à 8, l'arceau de protection 30 est venu de matière avec l'extrémité libre de la partie mobile 23, dont elle est un prolongement.

L'arceau de protection 30 est muni de deux jambes 32 et d'une voûte 34. Les jambes 32 sont sensiblement longitudinales et s'étendent sensiblement selon la même direction. Les jambes 32 sont toutes deux reliées à la voûte 34, elle-même sensiblement semi-circulaire, de sorte à former un U.

L'arceau de protection 30 est destiné à encercler la tête d'alimentation 14 lorsque les branches d'alimentation 16 sont disposée dans les gorges de maintien 24, 25. Plus précisément, la voûte 34 et une partie des jambes 32 encerclent ici la tête d'alimentation 14, une autre partie des jambes 32 s'étendant de part et d'autre des branches d'alimentation 16 sur une partie de leur longueur.

L'arceau de protection 30 est muni d'au moins une zone amincie de sorte à autoriser une déformation élastique de l'arceau de protection 30 provoquant le rapprochement des deux jambes 32 l'une vers l'autre sous l'effet d'un effort sensiblement perpendiculaire à la direction des jambes 32, dans le plan de l'arceau de protection 30.

Plus précisément, l'arceau de protection 30 est muni d'au moins une zone amincie 32A sur chaque jambe 32 et d'au moins une zone amincie 34A sur sa voûte 34.

On notera que dans ce mode de réalisation, l'entretoise 28 permet de définir, avec les jambes 32, et en particulier les zones amincies des jambes 32A, les gorges de maintien 25.

Le dispositif de protection 20 comprend en outre un boîtier de protection 40 comprenant un corps parallélépipèdique 42 et un canal de pincement 41. Le boîtier de protection 40 comprend ici une partie supérieure 40A et une partie inférieure 40B, divisant le corps parallélépipèdique 42 en deux parties selon un plan de coupe longitudinal du corps parallélépipèdique 42.

Dans le premier mode de réalisation représenté sur les figures 1 à 8, le canal de pincement 41 est délimité par la surface interne d'une jupe de protection 44.

La jupe de protection 44 fait saillie à partir d'une paroi 42P de la partie supérieure 40A du corps parallélépipédique 42, ici perpendiculairement à cette paroi 42P.

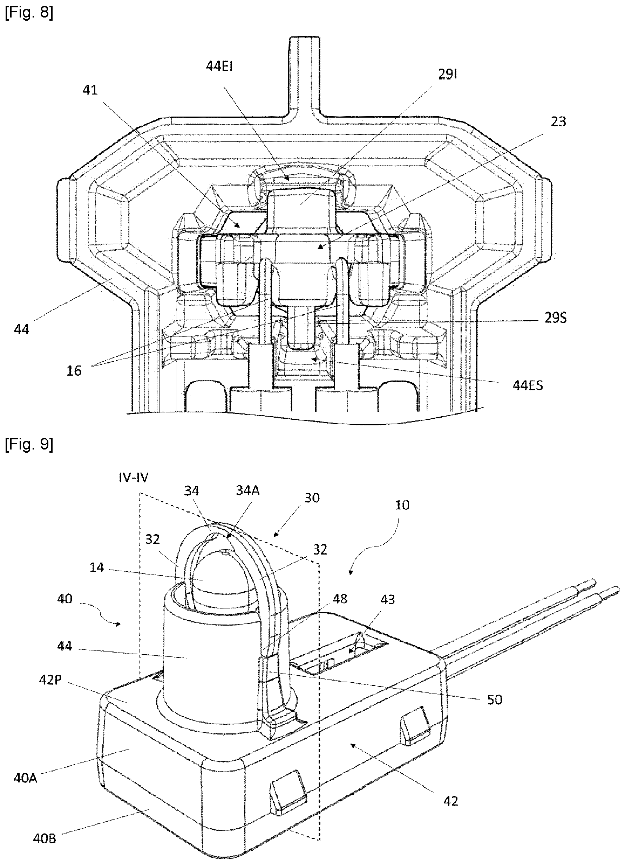

La paroi supérieure 42P est également munie de plusieurs fenêtres d'insertion 43 permettant à un opérateur d'insérer des guides latéraux, tels que des tiges métalliques par exemple, permettant de maintenir le composant électronique 12 en place latéralement et ainsi éviter qu'il ne se mette en travers par rapport à l'axe longitudinal du dispositif de protection 20 lors du pliage. Comme on peut le voir à la figure 8 en particulier, la jupe de protection 44 a dans ce premier mode de réalisation une section transversale en forme de prisme hexagonal. Cette forme permet entre autres d'économiser de la matière. On peut néanmoins envisager d'autres formes pour cette section transversale, telle qu'une section circulaire, carrée, hexagonale, etc. Les dimensions du canal de pincement 41, en particulier sa plus grande dimension (ici la plus grande des distances entre deux parois opposées du prisme hexagonal de la jupe de protection 44), est inférieur à la distance séparant les jambes 32 de l'arceau de protection, pour une raison qui sera expliquée plus loin.

Comme on peut le voir à la figure 1, le boîtier de protection 40 est destiné à être mis en place sur le gabarit de déformation 18 une fois la partie mobile 23 en deuxième position, autrement dit une fois la thermistance 12 pliée.

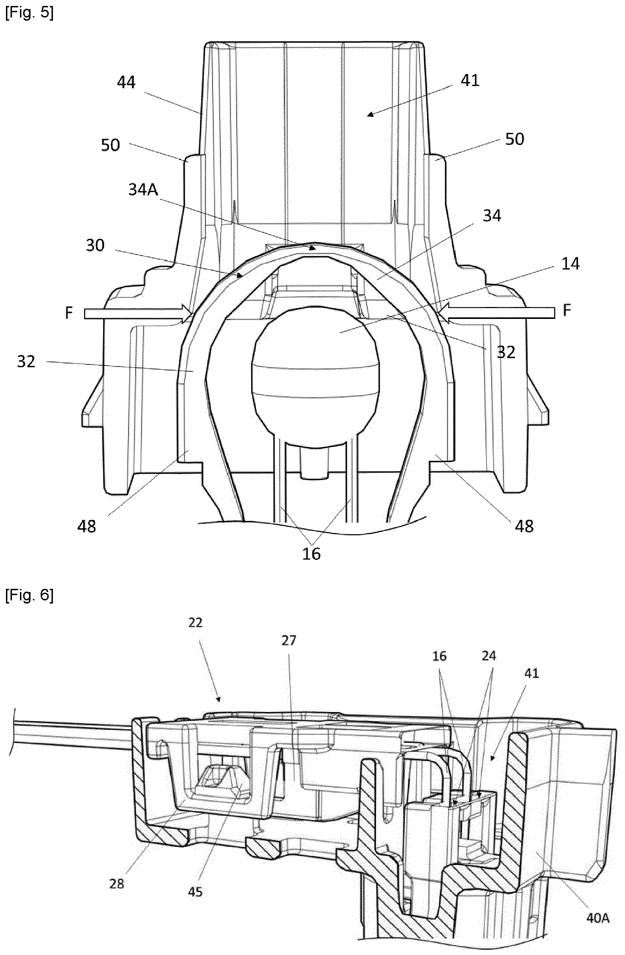

Le boîtier de protection 40 est en premier lieu maintenu en place sur le corps principal 22 du dispositif de protection 20 à l'aide de moyens d'encliquetage. Ces moyens d'encliquetage sont, comme on peut le voir sur la figure 6, ici composés, d'une part, de pattes d'encliquetage 45 (une seule est visible sur la figure 6) faisant saillie à partir d'une surface dite interne de la partie supérieure 40A du boîtier opposée à la paroi supérieure 42P du boîtier de protection, et, d'autre part, des arches de verrouillage 48 dans lesquelles les pattes d'encliquetage 45 viennent s'insérer et s'encliqueter.

Par ailleurs, le corps parallélépipèdique 42 recouvre une portion de la partie des branches d'alimentation 16 se trouvant dans les gorges de maintien 25 du corps principal 22. En outre, la jupe de protection 44 englobe la partie des branches d'alimentation 16 se trouvant dans les gorges de maintien 24 de la partie mobile 23, ainsi qu'une partie de la tête de mesure 14.

On va maintenant décrire l'interaction entre l'arceau de protection 30 et le boîtier de protection 40 en référence aux figures 4 et 5.

Une fois la thermistance 12 insérée dans le gabarit de déformation 18 et la partie mobile 23 pliée, on insère l'arceau de protection 30 dans le canal de pincement 41. Cette insertion se fait du côté de la paroi opposée à la paroi supérieure 42P de la partie supérieure 40A du boîtier de protection (autrement dit par le dessous en considérant le sens des figures).

Pour effectuer cette insertion, on pousse l'arceau de protection 30 vers l'entrée du canal de pincement 41 selon la direction de l'axe du canal de pincement 41, qui est ici la direction de l'axe de la jupe de protection 44.

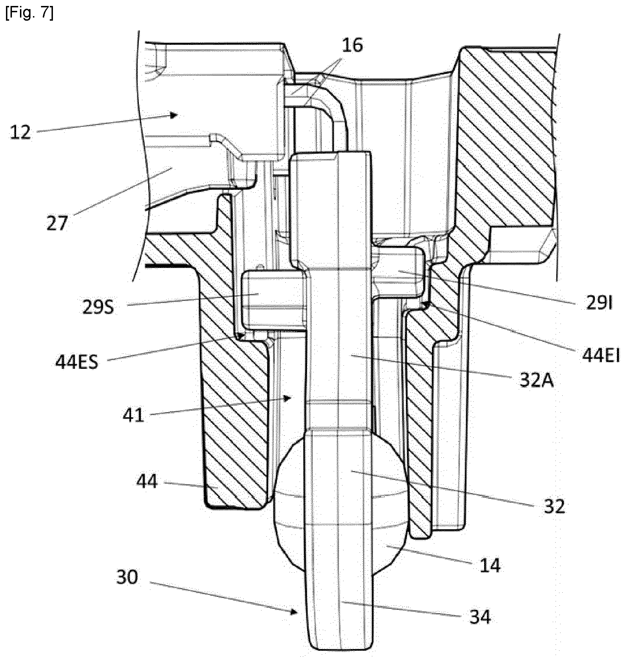

Afin d'éviter que la thermistance 12 et donc l'arceau de protection 30, ne soient poussés trop loin, un épaulement 44ES est pratiqué dans le canal de pincement 41, comme on peut le voir aux figures 7 et 8, contre lequel la saillie de blocage 29S vient en butée et ainsi marquer une fin de course de la thermistance dans le canal de pincement 41. En pratique, l'épaulement 44E est réalisé par évidement d'une surface interne de la jupe de protection 44.

En outre, pour éviter une insertion de la thermistance 12 dans le mauvais sens (inversion par symétrie axiale par rapport du canal de pincement 41), on prévoit un autre épaulement 44EI pratiqué dans le canal de pincement 41, comme on peut le voir aux figures 7 et 8, contre lequel une saillie de blocage inférieure 29I vient en butée.

Comme on peut le voir à la figure 7, l'épaulement 44EI est situé à une hauteur différente le long du canal de pincement 41 et la saillie de blocage inférieure 29I s'étend dans un sens opposé à la saillie de blocage supérieure 29I, en faisant saillie à partir de la surface opposée à la paroi à partir de laquelle la saillie de blocage supérieure 29S fait saillie. Du fait de la différence de hauteur entre les épaulements 44EI, 44ES, il n'est pas possible pour un opérateur d'insérer la thermistance 12 de façon erronée dans le canal de pincement 21. Les couples épaulement/saillie de blocage font ainsi office de détrompeurs.

Du fait de la poussée de l'arceau de protection 30 dans le canal de pincement 41, les dimensions du jupe de protection 44, en particulier sa plus grande dimension, étant inférieures à la distance séparant les jambes 32 de l'arceau de protection, un effort est appliqué selon une direction sensiblement perpendiculaire à la direction des jambes 32, dans le plan de l'arceau de protection 30, sur chacune des jambes. Cet effort, subi par chaque jambe dans un sens allant vers l'autre jambe 32, est représenté par les flèches F sur la figure 5.

Grâce à la présence des zones amincies 32A sur les jambes et de la zone amincie 34A sur la voûte, une déformation élastique de l'arceau de protection 30 est autorisée, de sorte que l'insertion de l'arceau de protection 30 dans la jupe de protection 44 provoque le rapprochement des deux jambes 32 l'une vers l'autre. Ainsi, il est possible d'introduire l'arceau de protection 30 dans la jupe de protection 44, et de lui faire parcourir le canal de pincement 41 de sorte à faire sortir partiellement l'arceau de protection 40 de la jupe de protection 44.

Pour éviter que l'arceau de protection 40 ne soit retiré du canal de pincement 41 selon un sens inverse de son sens d'introduction, les jambes 32 de l'arceau et le tube de réception 44 sont munis de moyens anti-retour 46 empêchant le retrait de l'arceau de protection 40 du tube de réception 44 dans un sens inverse de son insertion.

Les moyens anti-retour 46 comprennent deux épaulements anti-retour 48 disposé respectivement sur chaque jambe 32 de l'arceau et de deux épaulements de réception 48 correspondants pratiqués en saillie sur la surface externe du tube de réception 44. La fonction anti-retour est exercée par butée des épaulements anti-retour 48 contre les épaulements de réception 50.

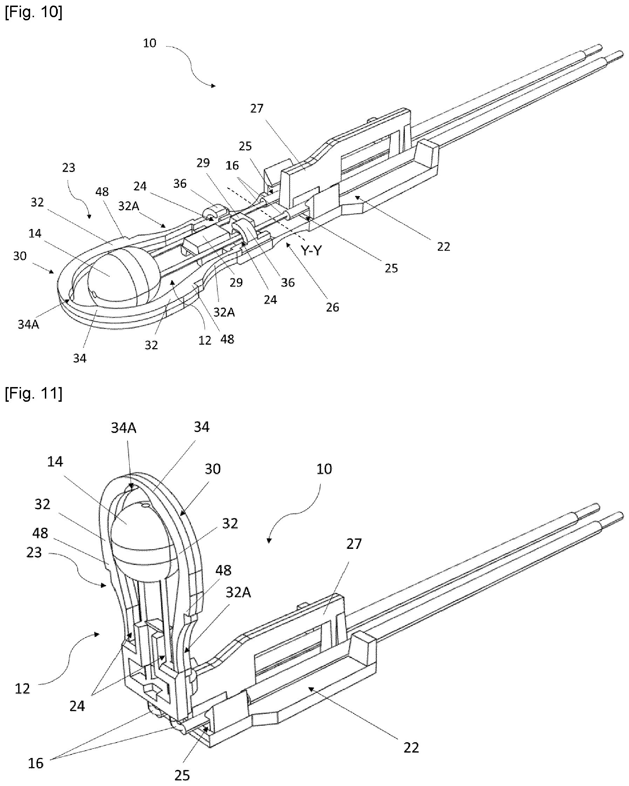

Dans le mode de réalisation illustré aux figures 9 à 11, l'ensemble de raccordement 10 est essentiellement similaire à celui du premier mode de réalisation, hormis quelques variations.

En premier lieu, la zone amincie 34A sur la voûte est ici constituée d'une échancrure semi-circulaire, mais peut revêtir d'autres formes.

Par ailleurs, le dispositif de protection 20 comprend, à la base des jambes 32, et pour chaque jambe 32, un crochet de maintien 36. Les crochets de maintien 36 font chacun saillie à partir d'une jambe 32 de sorte à prévenir un retrait, dans la direction normale au plan dans lequel s'étend la partie mobile 23, des branches d'alimentation 16 des gorges de maintien 24 de la partie mobile 23. Les crochets de maintien 36 permettent entre autres de délimiter les gorges de maintient de la partie mobile 24.

Le canal de pincement 41 du boîtier de protection 40 est dans ce deuxième mode de réalisation délimité par une jupe de protection 44 sous forme de tube ayant une forme cylindrique de révolution (la section transversale de la jupe de protection est un cercle). Le boîtier de protection 40 comprend également une seule fenêtre d'insertion 43.

On va maintenant décrire un procédé de déformation d'un composant électronique 12 mis en œuvre au moyen d'un gabarit de déformation 18 selon l'invention. Ce procédé s'applique de façon identique à chacun des modes de réalisation décrits précédemment, et à tout type de composant électronique.

Au cours d'une première étape, le gabarit de déformation 18 étant dans la première position, on introduit les branches d'alimentation 16 dans les gorges de maintien 25 du corps principal 22 et les gorges de maintien 24 de la partie mobile 23.

Puis, on déplace la partie mobile 23 vers la deuxième position par actionnement de l'articulation 26.

Ensuite, on insère l'arceau de protection 30 dans la jupe de protection 44 comme indiqué précédemment.

L'invention n'est pas limitée aux modes de réalisation présentés et d'autres modes de réalisation apparaîtront clairement à l'homme du métier.

### Liste de références

- 10 :: Ensemble de raccordement électrique
- 12 :: Composant électronique / Thermistance
- 14 :: Tête de mesure de la thermistance
- 16 :: Branches d'alimentation
- 18 :: Gabarit de déformation
- 20 :: Dispositif de protection
- 22 :: Corps principal
- 23 :: Partie mobile
- 24 :: Gorges de maintien de la partie mobile
- 25 :: Gorges de maintien du corps principal
- 26 :: Articulation
- 27 :: Paroi de séparation
- 28 :: Arches de verrouillage
- 29A :: Entretoises supérieures
- 29B :: Entretoises inférieures
- 30 :: Arceau de protection
- 32 :: Jambes de l'arceau
- 32A :: Zone amincie de jambe de l'arceau
- 34 :: Voûte de l'arceau
- 34A :: Zone amincie de la voûte de l'arceau
- 36 :: Crochet de maintien
- 40 :: Boîtier de protection
- 41 :: Canal de pincement
- 40A :: Partie supérieure du boîtier
- 40B :: Partie inférieure du boîtier
- 42 :: Corps parallélépipédique du boîtier
- 42P :: Paroi supérieure du corps du boîtier
- 43 :: Fenêtre d'insertion
- 44 :: Jupe de protection
- 45 :: Patte d'encliquetage
- 46 :: Moyens anti-retour
- 48 :: Epaulements anti-retour
- 50 :: Epaulements de réception
- F :: Effort de déformation de l'arceau de protection
- Y-Y :: axe de l'articulation

## Revendications

1. Dispositif de protection (20) d'un composant électronique (12) composé d'au moins une branche d'alimentation (16) électrique et d'une tête (14), comprenant :
- une gorge de maintien (24) de ladite au moins une branche d'alimentation (16),
- un arceau de protection (30) de ladite au moins une tête (14) muni de deux jambes (32) et d'une voûte (34), l'arceau de protection (30) étant destiné à cercler la tête (14) lorsque ladite branche d'alimentation (16) est disposée dans la gorge de maintien (24), et
**caractérisé en ce qu'il** comprend un boîtier de protection (40) muni d'un canal de pincement (41)
**et en ce que** l'arceau de protection (30) est muni d'au moins une zone amincie autorisant la déformation élastique de l'arceau de protection (30) de sorte que l'insertion de l'arceau de protection (30) dans le canal de pincement (41) provoque le rapprochement des deux jambes (32) l'une vers l'autre.

2. Dispositif de protection (20) selon la revendication 1, dans lequel le canal de pincement (41) est délimité par une jupe de protection (44), par exemple un tube de forme générale cylindrique de révolution.

3. Dispositif de protection (20) selon la revendication 1 ou 2, dans lequel l'arceau de protection (30) est muni d'au moins une zone amincie sur chaque jambe (32) et d'au moins une zone amincie sur sa voûte (34).

4. Dispositif de protection (20) selon l'une quelconque des revendications précédentes, dans lequel les jambes (32) de l'arceau et le canal de pincement (41) sont munis de moyens anti-retour (46) empêchant le retrait de l'arceau de protection (30) du canal de pincement (41) dans un sens inverse de son insertion.

5. Dispositif de protection (20) selon la revendication 4, dans lequel les moyens anti-retour (46) comprennent deux épaulements anti-retour (48) disposé respectivement sur chaque jambe (32) de l'arceau et de deux épaulements de réception (50) correspondants pratiqués en saillie sur la surface externe du canal de pincement (41), la fonction anti-retour étant exercée par butée des épaulements anti-retour (48) contre les épaulements de réception (50).

6. Dispositif de protection (20) selon l'une quelconque des revendications précédentes, dans lequel le boîtier de protection comprend un corps (42) parallélépipédique, le canal de pincement (41) faisant saillie à partir d'une des parois (42P) du corps (42) parallélépipédique, de préférence perpendiculairement à cette paroi (42P).

7. Gabarit de déformation (18) d'au moins une branche d'alimentation (16) électrique d'un composant électronique (12), comprenant :
- un corps principal (22) et
- une partie mobile (23),
le corps principal (22) et la partie mobile (23) étant chacun munis d'au moins une gorge de maintien (24, 25) de ladite au moins une branche d'alimentation (16),
la gorge de maintien (25) de la partie mobile formant un prolongement de la gorge de maintien (25) du corps principal,
le corps principal (22) et la partie mobile (23) étant reliés par une articulation (26) formant axe de pivotement de la partie mobile (23) par rapport au corps principal (22),
de sorte que la partie mobile (23) soit déplaçable entre des première et deuxième positions prédéterminées, les première et deuxième position étant espacées angulairement autour d'un axe (Y-Y) de l'articulation,
l'extrémité libre de la partie mobile (23) étant munie d'un dispositif de protection (20) selon l'une quelconque des revendications précédentes.

8. Gabarit de déformation (18) selon la revendication 7, dans lequel l'articulation (26) est une charnière, la charnière (26) étant de préférence formée par une paroi flexible reliant le corps principal (22) et la partie mobile (23), le passage de la partie mobile (23) de la première à la deuxième position s'effectuant par déformation de la paroi flexible.

9. Gabarit de déformation (18) selon la revendication 8, dans lequel le corps principal (22) et la partie mobile (23) sont venus de matière, et de préférence réalisés dans un matériau plastique, la paroi flexible (26) est une paroi amincie prolongeant le corps principal (22).

10. Ensemble d'un composant électronique (12), de préférence une thermistance, muni d'au moins une branche d'alimentation (16) et d'un dispositif de protection (20) du composant électronique, **caractérisé en ce que** le dispositif de protection (20) est selon l'une quelconque des revendications 1 à 6.

11. Ensemble d'un composant électronique (12), de préférence une thermistance, muni d'au moins une branche d'alimentation (16) et d'un gabarit de déformation (18) du composant électronique, **caractérisé en ce que** le gabarit de déformation (18) est selon l'une quelconque des revendications 7 à 9.

12. Procédé de déformation d'un composant électronique (12) composé d'au moins une branche d'alimentation (16) électrique et d'une tête (14) mis en œuvre au moyen d'un gabarit de déformation (18) selon les revendications 7 à 9, comprenant les étapes suivantes :
- le gabarit de déformation (18) étant dans la première position, introduction de ladite au moins branche de connexion (16) dans les gorges de maintien (24, 25) du gabarit de déformation ;
- déplacement de la partie mobile (23) vers la deuxième position par déplacement de l'articulation (26),
- insertion de l'arceau de protection (30) dans le canal de pincement (41).
